# EUROPÄISCHE PATENTSCHRIFT

(11) **EP 2 506 996 B1**
(45) Veröffentlichungstag und Bekanntmachung des Hinweises auf die Patenterteilung: **01.01.2014**
(21) Anmeldenummer: 10787263.2
(22) Anmeldetag: 26.11.2010
(51) Int. Cl.: B21K 1/04, B21K 1/76, B23D 23/04

(54) **VERFAHREN UND VORRICHTUNG ZUR HERSTELLUNG EINES MIT EINEM DURCHGEHENDEN LOCH VERSEHENEN FORMTEILS**
METHOD AND DEVICE FOR PRODUCING A MOLDED PART PROVIDED WITH A THROUGH-HOLE
PROCÉDÉ ET DISPOSITIF DE PRODUCTION D'UNE PIÈCE FAÇONNÉE PRÉSENTANT UN TROU TRAVERSANT

(30) Priorität: 30.11.2009 CH 18312009
(43) Veröffentlichungstag der Anmeldung: 10.10.2012
(73) Patentinhaber: Hatebur Umformmaschinen AG, 4153 Reinach (CH)
(72) Erfinder: BÜRGIN, Christian, CH-4460 Gelterkinden (CH); CHRISTOFFEL, Thomas, CH-5064 Wittnau (CH); MATT, Andreas, 79730 Murg (DE); STEMMELIN, Patrick, F-68480 Moernach (FR); VULCAN, Mihai, CH-4114 Hofstetten (CH)
(74) Vertreter: Bollhalder, Renato
(86) Internationale Anmeldenummer: PCT/CH2010/000301
(87) Internationale Veröffentlichungsnummer: WO 2011/063542

(56) Entgegenhaltungen:
- DE-A1- 2 546 819
- DE-A1- 3 147 897
- GB-A- 2 047 585
- JP-A- 59 050 945
- JP-A- 62 084 849

## Beschreibung

Die Erfindung betrifft ein Verfahren zur Herstellung eines mit einem durchgehenden Loch versehenen Formteils, bei dem ein Stangenmaterial in seiner Längsrichtung um eine definierte Länge durch eine stationäre Führung gleicher Querschnittsform wie das Stangenmaterial in eine Umformmatrize, deren innere Umfangswand den äusseren Umfang des herzustellenden Formteils festlegt, vorgeschoben wird, der in der Umformmatrize befindliche Teil des Stangenmaterials axial durchsetzt und anschliessend vom Rest des Stangenmaterials abgetrennt wird und das so hergestellte Formteil dann abgeführt wird. Die Erfindung betrifft ausserdem eine Vorrichtung zur Durchführung des Verfahrens mit Vorschubmitteln und Festhaltemitteln für ein Stangenmaterial, einer Führung für das Stangenmaterial, einer Umformmatrize und Durchsetzungsmitteln zum axialen Durchsetzen des in der Umformmatrize befindlichen Teils des Stangenmaterials.

Ein ähnliches Verfahren ist z.B. aus der DE 31 47 897 A1 bekannt. Gemäss diesem Dokument erfolgt die spanlose Serienherstellung von identischen ringförmigen Metallteilen ausgehend von einem metallischen Stangenmaterial durch Stauchung und dadurch bewirkte Umformung eines Endbereichs des Stangenmaterials zu einer Scheibe und durch anschliessendes axiales Durchstossen der Scheibe mittels eines Stempels gleicher Querschnittform wie das (ungestauchte) Stangenmaterial und Trennen des vom Stempel durchgestossenen Scheibenkerns von der Scheibe. Der mit dem ungestauchten Stangenmaterialabschnitt einstückige Scheibenkern bildet zusammen mit dem letzteren den Ausgangspunkt für einen weiteren Verfahrenszyklus solange, bis der verbliebene Stangenmaterialrest nicht mehr für die Bildung weiterer Formteile ausreicht und als Abfall verloren geht.

Beim Durchstossen des Scheibenkerns bildet sich am Umfangsrand des dabei erzeugten Lochs in der Scheibe aufgrund der wirkenden Scher- bzw. Zugspannungen eine unerwünschte Bruchfläche mit Rissen und allenfalls Graten, die eine Nachbearbeitung der Formteile erforderlich machen können.

Ein Verfahren gemäss dem Oberbegriff von Patentanspruch 1 ist aus der JP 62 084849 A bekannt, die den nächstliegenden Stand der Technik bildet. Bei diesem Verfahren wird das Formteil durch seitliches Abscheren vom Stangenmaterial getrennt.

Der Erfindung liegt die Aufgabe zugrunde, ein Verfahren der eingangs erwähnten Art dahingehend zu verbessern, dass die damit erzeugten Formteile keiner oder zumindest einer wesentlich geringeren Nachbearbeitung bedürfen. Ausserdem sollen auch an den Abtrennstellen des Stangenmaterials keine Grate oder sonstigen die weiteren Verarbeitungsschritte störenden Verformungen entstehen.

Diese Aufgabe wird durch das erfindungsgemässe Verfahren und die erfindungsgemässe Vorrichtung gelöst, wie sie im unabhängigen Anspruch 1 bzw. unabhängigen Anspruch 9 definiert sind. Besonders vorteilhafte Weiterbildungen und Ausgestaltungen der Erfindung ergeben sich aus den jeweils abhängigen Ansprüchen.

Unter "Stangenmaterial" bzw. "Rohmaterial" wird im vorliegenden Zusammenhang jede Materialform mit ausgeprägter Längserstreckung und beliebigem, über die Längserstreckung konstantem Querschnitt verstanden. Insbesondere fallen Stäbe, Stangen und Drähte jeglicher Abmessungen unter diese Definition. Kreisrunde Querschnitte sind die Regel, die Erfindung ist aber nicht darauf beschränkt. Die Bezeichnung "stangenförmig" ist analog zu verstehen. Unter "Scheibe" ist im vorliegenden Zusammenhang jede gegenüber dem Stangenmaterial bzw. Rohmaterial in den Querschnittsabmessungen erweiterte Körperform zu verstehen. Flache Scheiben mit insbesondere kreisförmiger Aussenkontur sind die Regel, die Erfindung ist aber nicht darauf beschränkt.

Das Wesen der Erfindung besteht in Folgendem: Bei einem Verfahren zur Herstellung eines mit einem durchgehenden Loch versehenen Formteils wird ein Stangenmaterial in seiner Längsrichtung um eine definierte Länge durch eine stationäre Führung gleicher Querschnittsform wie das Stangenmaterial in eine Umformmatrize, deren innere Umfangswand den äusseren Umfang des herzustellenden ringförmigen Formteils festlegt, vorgeschoben und dann axial festgehalten. Der innerhalb der Umformmatrize befindliche Teil des Stangenmaterials wird mittels mindestens eines Napfwerkzeugs axial durchsetzt und dabei fliessgepresst, wobei das verdrängte Material zwischen das mindestens eine Napfwerkzeug und die innere Umfangswand der Umformmatrize fliesst. Das so gebildete, in der Umformmatrize befindliche Formteil wird zusammen mit der es umgebenden Umformmatrize und dem mindestens einen Napfwerkzeug koaxial relativ zum Rest des Stangenmaterials verdreht und das Formteil dadurch vom Rest des Stangenmaterials abgetrennt. Anschliessend wird das Formteil abgeführt.

Durch den Napfvorgang und die Abtrennung des Formteils mittels Torsion werden nicht nur sauber geformte Formteile erhalten, es entstehen auch am verbleibenden Rest des Stangenmaterials keinerlei Grate oder sonstigen bei seiner weiteren Verarbeitung störenden Verformungen.

Für die Bereitstellung von Rohlingen für einen nachfolgenden Umformungsprozess, z.B. in einem Kaltfliesspressprozess, ist aus der DE 25 46 819 A1 ein Verfahren zum spanlosen Abtrennen solcher Rohlinge von Stangen- oder Rohrmaterial bekannt, bei welchem das abzutrennende Material zu beiden Seiten der gewünschten Trennebene in koaxialen Spannfuttern festgeklemmt wird und die beiden Spannfutter dann relativ gegeneinander verdreht werden, wobei der Rohling vom Rest des Materials abgeschert wird. Zur Unterstützung des Torsionsschervorgangs kann das Material im Bereich der Trennebene zusätzlich gekerbt werden.

Ein weitestgehend ähnliches Verfahren für die Abtrennung von Rohlingen von einem Stangenmaterial ist aus der DE 29 16 031 A1 bekannt. Das zu trennende Material wird hierbei ebenfalls beidseits der gewünschten Trennebene in Spannzangen oder formschlüssigen Drehmomenteinleitungsorganen festgehalten und diese werden wieder relativ zu einander verdreht. In einer bevorzugten Ausführungsform wird der Torsionsscherkraft eine zusätzliche Scherkraft überlagert, welche die Abscherung des Rohlings begünstigt. Die zusätzliche Scherkraft wird aus der Torsion abgeleitet, indem die Drehachsen der beiden Spannzangen bzw. Drehmomenteinleitungsorgane etwas exzentrisch zum Stangenmaterial angeordnet sind.

Weder beim Verfahren der DE 25 46 819 A1 noch beim Verfahren der DE 29 16 031 A1 erfolgt eine Abtrennung eines bereits im Wesentlichen fertigen Formteils.

Bei einer vorteilhaften Ausführungsvariante des erfindungsgemässen Verfahrens wird der nach dem Vorschub des Stangenmaterials in die Umformmatrize innerhalb der Umformmatrize befindliche Endbereich des Stangenmaterials bei axial festgehaltenem Stangenmaterial mittels mindestens eines Stauchwerkzeugs axial gestaucht und dabei zu einer im Umfang durch die Umformmatrize begrenzten Scheibe umgeformt, die danach mittels des mindestens einen Napfwerkzeugs axial durchsetzt wird.

Gemäss einer bevorzugten Ausführungsform des erfindungsgemässen Verfahrens wird die Scheibe mittels des mindestens einen Napfwerkzeugs nur zu etwa 98-99% ihrer axialen Dicke durchsetzt, so dass das Formteil vor seiner Abtrennung zunächst noch über einen dünnen Umfangssteg mit dem Stangenmaterial verbunden bleibt, der dann durch Torsion geschert wird. Dadurch wird eine besonders saubere, d.h. weitestgehend verformungsfreie Abtrennung erreicht und es entstehen am verbleibenden Rest des Stangenmaterials keinerlei Grate.

Damit das für das Abtrennen des Formteils durch Torsion erforderliche Drehmoment in das Formteil eingeleitet werden kann, muss zwischen der Umformmatrize und dem in dieser befindlichen Formteil einerseits und zwischen dem Formteil und dem Napfwerkzeug anderseits ein ausreichender Reib- oder Formschluss bestehen. Im Fall des Reibschlusses kann dieser gemäss einer vorteilhaften Ausführungsform der Erfindung dadurch erreicht bzw. verbessert werden, dass die Umformmatrize in radialer Richtung etwas elastisch ausgebildet ist. Die Elastizität kann durch geeignete Materialwahl oder andere Vorkehrungen den Erfordernissen entsprechend angepasst werden.

Besonders günstig und vorteilhaft kann es sein, wenn das Formteil während seiner Abtrennung vom Rest des Stangenmaterials mit einer axialen Druckkraft beaufschlagt wird. Die axiale Druckkraft wird mit Vorteil so gross gewählt, dass eine ausreichende Formfüllung in den Randbereichen der Umformmatrize sichergestellt und bei rotationssymmetrischen Formteilen eine ausreichende Reibkraft an den anliegenden Wänden der Umformmatrize und des Napfwerkzeugs erzeugt wird, die das Abtrennen des Formteils durch Torsion ermöglicht.

Bei dem in der angeführten DE 31 47 897 A1 beschriebenen Verfahren wird das Stangenmaterial zwischen zwei Gesenken gehalten, welche den Vorschub des Stangenmaterials und die Stauchung desselben bewirken. Dadurch ist die Länge des Stangenmaterials und damit die Anzahl der mit einem Stück Stangenmaterial herstellbaren Formteile begrenzt und die nicht verwendbaren Reststücke des Stangenmaterials gehen als Abfall verloren. Gemäss einer weiteren vorteilhaften Ausgestaltung des erfindungsgemässen Verfahrens wird dieses Problem dadurch vermieden, dass zur Stützung des Stangenmaterials und zu seiner lagemässigen Fixierung während der Umformung und vorzugsweise auch während des Napfvorgangs und während des Abtrennvorgangs eine stationäre Klemmanordnung eingesetzt wird, welche am Umfang des Stangenmaterials angreift. Auf diese Weise wird die Länge des Stangenmaterials nicht durch ein zweites Gesenk begrenzt, so dass auch lange Stangen oder quasi endloses Stangenmaterial, das z.B. auf Spulen aufgewickelt vorliegt, verarbeitet werden kann und dementsprechend praktisch kein nennenswerter Abfall mehr entsteht.

Aus analogen Gründen erfolgt auch der Vorschub des Stangenmaterials vorteilhafterweise mittels einer am Umfang desselben angreifenden, öffen- und schliessbaren Einzuganordnung, welche in Längsrichtung hin- und hergehend beweglich antreibbar ist.

Nach dem Abtrennen des Formteils vom Rest des Stangenmaterials wird es aus dem Umformbereich der Umformvorrichtung ab- und z.B. einer weiteren Verarbeitungsstufe zugeführt. Gemäss einer bevorzugten Ausführungsvariante wird das Formteil dabei in der Umformmatrize selbst abgeführt und erst danach aus der Umformmatrize entnommen. Zum Abführen des Formteils in der Umformmatrize wird vorzugsweise die Umformmatrize mit dem Formteil zunächst in Richtung der und dann quer zur Längserstreckung des Rests des Stangenmaterials von diesem wegbewegt. Dies erlaubt eine konstruktive Vereinfachung der gesamten Vorrichtung.

Eine zur Durchführung des erfindungsgemässen Verfahrens geeignete Vorrichtung umfasst Vorschubmittel und Festhaltemittel für ein Stangenmaterial, eine Führung für das Stangenmaterial, eine Umformmatrize und Durchsetzungsmittel zum axialen Durchsetzen des in der Umformmatrize befindlichen Teils des Stangenmaterials. Die Vorrichtung weist ausserdem einen Antrieb auf, mit welchem die Umformmatrize mit dem in ihr befindlichen Teil des Stangenmaterials, der nach dem axialen Durchsetzen ein Formteil bildet, und der Rest des Stangenmaterials relativ zueinander verdrehbar sind, wobei das Formteil durch Torsionsscherung vom Rest des Stangenmaterials abtrennbar ist.

Bei einer vorteilhaften Ausführungsvariante weist die erfindungsgemässe Vorrichtung mindestens ein Stauchwerkzeug zur axialen Stauchung und Umformung eines in der Umformmatrize befindlichen Endbereichs des Stangenmaterials auf

Gemäss einer vorteilhaften Ausführungsform umfassen die Durchsetzungsmittel ein Napfwerkzeug, welches einen Napfstempel und eine diesen umschliessende Napfhülse aufweist, über welche das in der Umformmatrize befindliche Formteil mit einer axialen Druckkraft beaufschlagbar ist.

Vorteilhafterweise umfassen die Festhaltemittel für das Stangenmaterial eine stationäre, am Umfang des Stangenmaterials angreifende, öffen- und schliessbare Klemmanordnung. Besonders zweckmässig ist es dabei, wenn die Klemmanordnung ein in seinen Innendimensionen der äusseren Querschnittsgestalt des Stangenmaterials angepasstes Führungsrohr und um dessen Umfang verteilt angeordnete, achsparallele Klemmbacken aufweist, die in achsparallelen Schlitzen im Führungsrohr im Wesentlichen spielfrei, aber radial ein- und auswärts beweglich angeordnet sind und durch äussere Krafteinwirkung radial auf das Stangenmaterial pressbar sind. Vorzugsweise sind dabei die Klemmbacken an ihren dem Stangenmaterial zugewandten Flächen mit reibungserhöhenden Strukturierungen, insbesondere Rippen, versehen. Durch diese bevorzugte Ausbildung der Klemmanordnung wird sichergestellt, dass auch bei schwankender Dicke des Stangenmaterials ein ausreichender Klemmdruck aufgebracht werden kann, und es wird verhindert, dass aufgrund des während der Umformung im Stangenmaterial herrschenden Druckspannungszustands Material zwischen die Klemmbacken ausgetrieben werden kann, was zu Störungen oder gar Blockierungen beim Weitertransport des Stangenmaterials führen könnte.

Um das Einführen bzw. Entnehmen von Stangenanfang bzw. Stangenende insbesondere bei dicken Stangen zu erleichtern, kann das Führungsrohr der Klemmanordnung auch geteilt ausgebildet werden. Denkbar ist beispielsweise ein zweigeteiltes Führungsrohr mit je zwei Klemmbacken. Zum Einführen bzw. Entnehmen von Stangenanfang bzw. Stangenende werden die Rohrhälften auseinander gefahren und danach wieder spaltlos aneinander gepresst, so dass das Führungsrohr während der Produktion vollständig geschlossen ist.

Gemäss einer weiteren vorteilhaften Ausbildung der erfindungsgemässen Vorrichtung weist diese ein Matrizenkarussel auf, in welchem zwei oder mehrere Umformmatrizen angeordnet sind. Mittels des Matrizenkarussels kann auf einfache und zweckmässige Weise die das Formteil enthaltende Umformmatrize aus dem Umformbereich abgeführt und für den nächsten Umformvorgang durch eine leere Umformmatrize ersetzt werden.

Alternativ sind auch lineare Matrizentransporteinrichtungen denkbar.

Das erfindungsgemässe Verfahren und die erfindungsgemässe Vorrichtung sind in der Kalt- bis Warmumformung im gesamten Temperaturbereich einsetzbar.

Im Folgenden werden das erfindungsgemässe Verfahren und die erfindungsgemässe Vorrichtung unter Bezugnahme auf die beigefügten Zeichnungen anhand eines Ausführungsbeispiels detaillierter beschrieben. Es zeigen:
- Fig. 1-13: - die wesentlichen Teile der erfindungsgemässen Vorrichtung in dreizehn typischen Verfahrensphasen;
- Fig. 14: - eine schematische Seitenansicht der Umformkomponenten der erfindungsgemässen Vorrichtung,
- Fig. 15: - eine schematische Axialansicht gemäss der Linie XV-XV der Fig. 14,
- Fig. 16: - Stangenmaterial und ein daraus geformtes Formteil im Bereich der Abtrennebene,
- Fig. 17: - das Detail XVII aus Fig. 16 in vergrösserter Darstellung,
- Fig. 18: - eine Perspektivansicht einer besonders zweckmässigen Ausgestaltung einer Klemmanordnung der erfindungsgemässen Vorrichtung,
- Fig. 19: - einen schematischen Schnitt senkrecht zur Längsachse der Klemmanordnung der Fig. 18,
- Fig. 20: - einen Axialschnitt durch die Klemmanordnung gemäss der Linie XX-XX der Fig. 19 und
- Fig. 21: - das Detail XXI aus Fig. 20 in vergrösserter Darstellung.

Die folgenden Ausführungen beschreiben rein beispielsweise die Herstellung von flachen, kreisringförmigen Formteilen, wobei Stangenmaterial bzw. ein Rohmaterial mit kreisförmigem Querschnitt zum Einsatz kommt.

Für die nachstehende Beschreibung gilt die folgende Festlegung: Sind in einer Figur zum Zweck zeichnerischer Eindeutigkeit Bezugszeichen angegeben, aber im unmittelbar zugehörigen Beschreibungsteil nicht erwähnt, so wird auf deren Erläuterung in vorangehenden oder nachfolgenden Beschreibungsteilen verwiesen. Umgekehrt sind zur Vermeidung zeichnerischer Überladung für das unmittelbare Verständnis weniger relevante Bezugszeichen nicht in allen Figuren eingetragen. Hierzu wird auf die jeweils übrigen Figuren verwiesen.

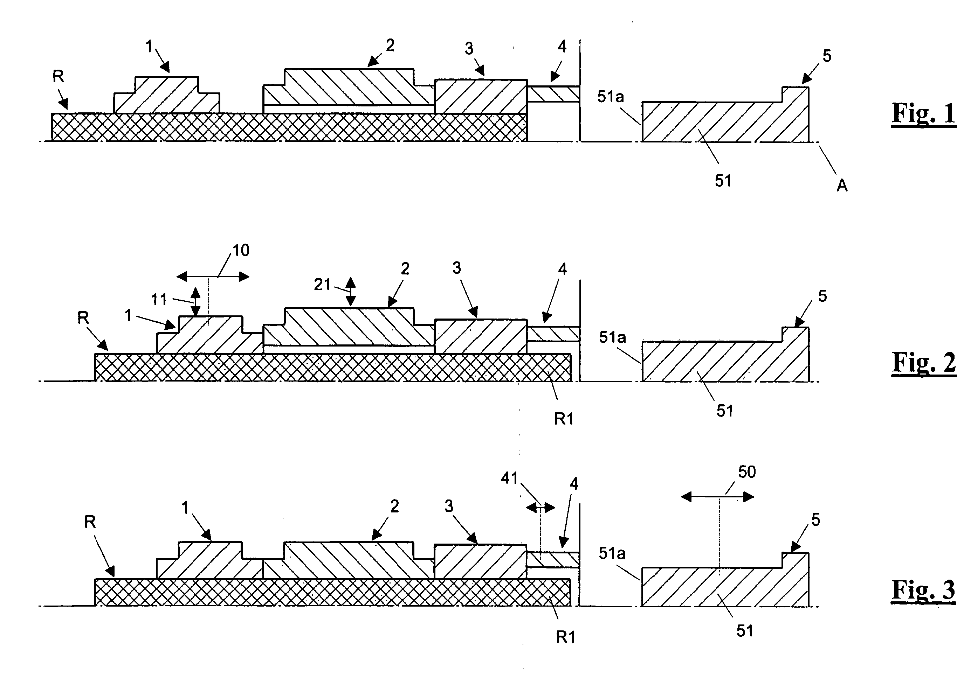

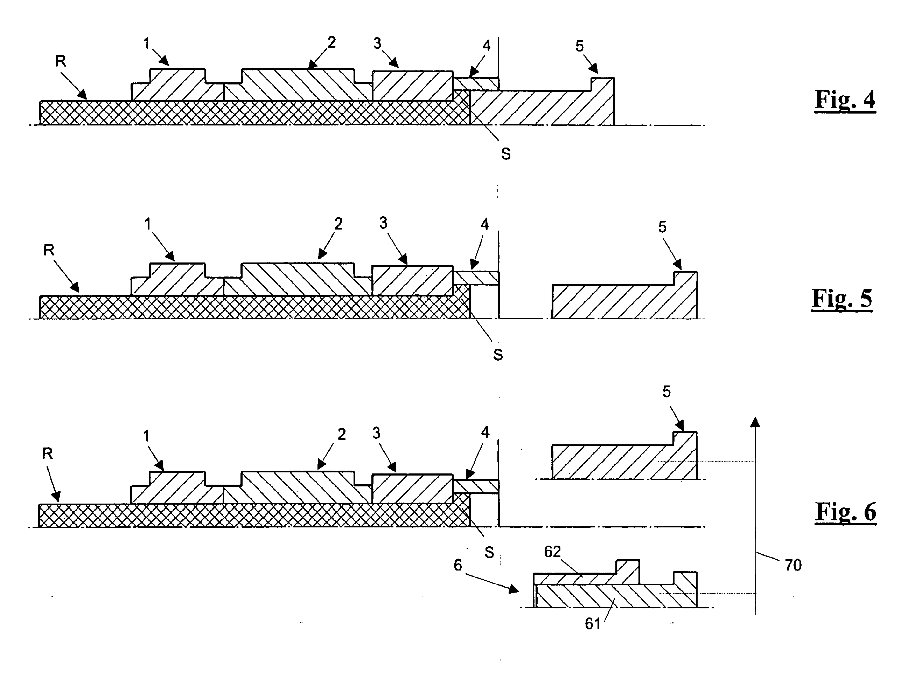

Die Figuren 1-13 illustrieren ein Ausführungsbeispiel der Erfindung, wobei nur die für das Verständnis der Erfindung wesentlichen Teile der Vorrichtung in axialen Halbschnitten dargestellt sind. Man erkennt koaxial zu einer Achse A hintereinander angeordnet eine Einzuganordnung 1, eine als Festhaltemittel wirkende Klemmanordnung 2, eine stationäre Führung 3, eine Umformmatrizen 4, ein Stauchwerkzeug 5 (Figuren 1-6) und ein Napfwerkzeug 6 (Figuren 6-12). Ein mit R bezeichnetes Stangenmaterial (Rohmaterial) erstreckt sich koaxial durch die Einzuganordnung 1, die Klemmanordnung 2 und die stationäre Führung 3.

Die stationäre Führung 3 besitzt eine durchgehende, hier im Beispiel zylindrische Führungsöffnung mit im Wesentlichen derselben Querschnittsgestalt wie das zum Einsatz kommende Stangenmaterial R und dient im Wesentlichen als Führung für das letztere.

Die Einzuganordnung 1 sowie das Stauchwerkzeug 5 und das Napfwerkzeug 6 sind durch in der Zeichnung durch Doppelpfeile 10, 50 und 60 symbolisierte Antriebsmittel axial verstellbar (Figuren 2, 3 und 7). Die axial hin- und hergehend beweglich angetriebene Einzuganordnung 1 bildet Vorschubmittel für das Stangenmaterial R.

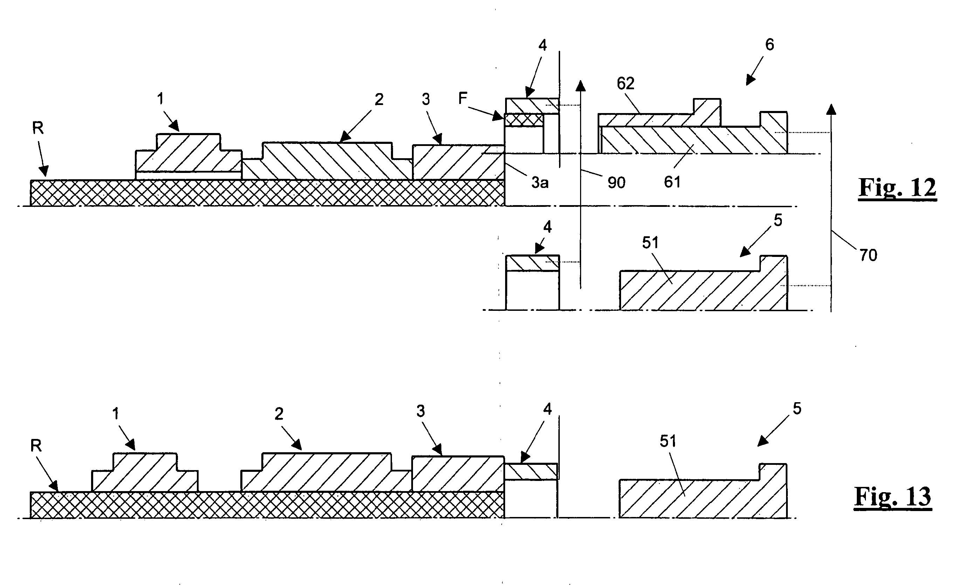

Die Umformmatrize 4 ist hülsenförmig ausgebildet, wobei ihre Innenabmessungen der äusseren Querschnittsgestalt des herzustellenden Formteils entsprechen. Ihr Innenraum ist dabei im Durchmesser grösser als der Durchmesser des Stangenmaterials R. Die Umformmatrize 4 ist in axialer Richtung verstellbar, was in Fig. 3 durch einen Doppelpfeil 41 symbolisiert ist. Ferner ist die Umformmatrize 4 senkrecht zur Achse A bewegbar. Darauf wird weiter unten im Zusammenhang mit den Figuren 12 und 13 noch eingegangen.

Das Stauchwerkzeug 5 umfasst einen Stauchstempel 51, der im Wesentlichen dieselbe Querschnittsgestalt, speziell denselben Durchmesser wie der Innenraum der hülsenförmigen Umformmatrize 4 aufweist. Die Stirnfläche 51a des Stauchstempels 51 ist hier eben ausgebildet.

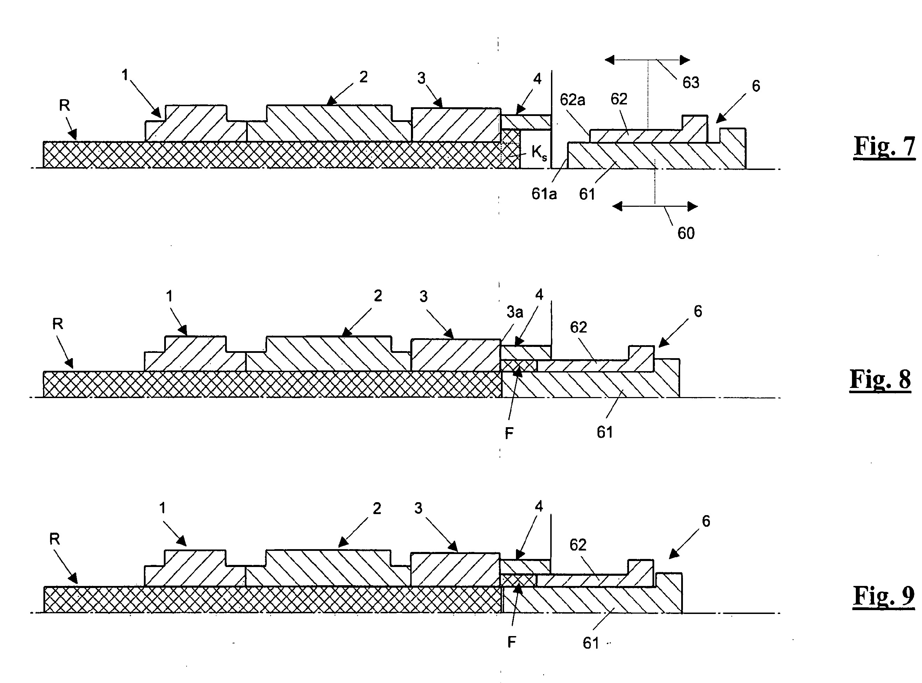

Das Napfwerkzeug 6 umfasst einen Napfstempel 61 und darauf koaxial verschiebbar eine Napfhülse 62. Der Napfstempel 61 weist im Wesentlichen dieselbe Querschnittsgestalt, speziell denselben Durchmesser auf wie das Stangenmaterial R. Die äussere Querschnittsgestalt der Napfhülse 62 entspricht im Wesentlichen der inneren Querschnittsgestalt der hülsenförmigen Umformmatrize 4. Die Stirnflächen 61a und 62a des Napfstempels 61 bzw. der Napfhülse 62 sind hier eben ausgebildet. Die relative Verschiebung der Napfhülse 62 auf dem Napfstempel 61 erfolgt über einen durch einen Doppelpfeil 63 symbolisierten Antrieb (Fig. 7).

Die Einzuganordnung 1 weist beispielsweise zwei gegenüberliegende Klemmbacken auf, die an die äussere Form des Stangenmaterials R angepasst sind und radial gegen das Stangenmaterial gepresst (geschlossen) bzw. radial von diesem abgehoben (geöffnet) werden können. Das Öffnen bzw. Schliessen der Einzuganordnung erfolgt mittels eines Antriebs, der in der Zeichnung lediglich durch einen Doppelpfeil 11 symbolisiert ist (Fig. 2).

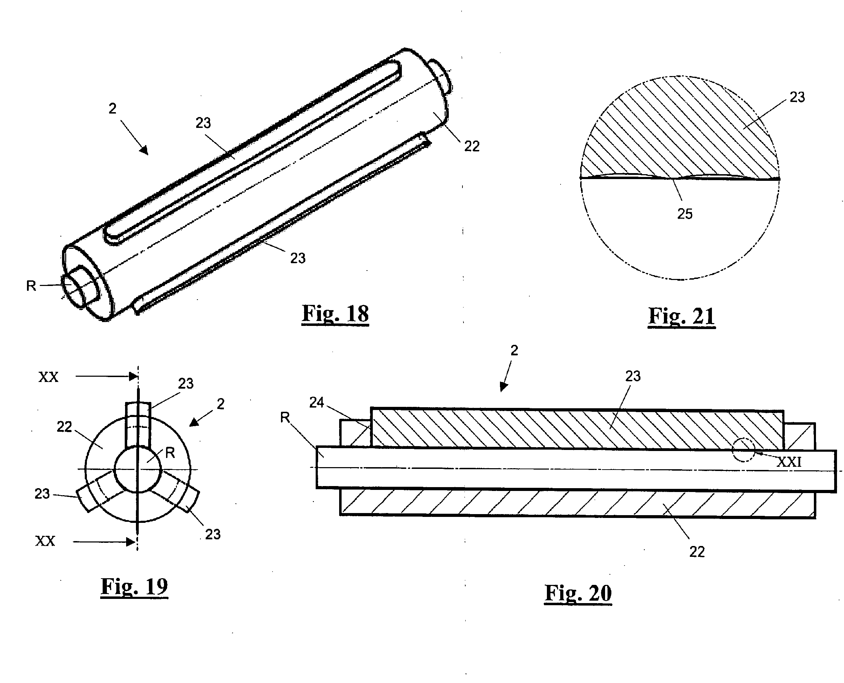

In analoger Weise kann die Klemmanordnung 2 in einer einfachen Ausführungsform vorzugsweise mehrere rund um das Stangenmaterial R verteilte Klemmbacken aufweisen, die zusammen eine Art Spannfutter bilden, welches ebenfalls über einen in der Zeichnung lediglich durch einen Doppelpfeil 21 symbolisierten Antrieb geschlossen bzw. geöffnet werden kann (Fig. 2). Eine besonders zweckmässige und vorteilhafte Ausführungsform der Klemmanordnung 2 ist weiter unten noch anhand der Figuren 18-21 näher beschrieben.

Die Einzuganordnung 1, die Klemmanordnung 2, die stationäre Führung 3, die bewegliche hülsenförmige Umformmatrize 4, das Stauchwerkzeug 5 und das Napfwerkzeug 6 sind Teile einer übergeordneten Umformmaschine, welche in an sich bekannter Weise Antriebsmittel für die Realisierung der noch zu beschreibenden Bewegungsabläufe der erwähnten Vorrichtungsteile sowie für die Erzeugung der erforderlichen Kräfte aufweist. Der Fachmann bedarf dazu keiner näheren Erläuterung.

Das erfindungsgemässe Verfahren läuft in einem sich wiederholenden Zyklus ab.

Vor dem allerersten Verfahrensschritt wird vorbereitend das Stangenmaterial R so weit durch die geöffnete Einzuganordnung 1 und die geöffnete Klemmanordnung 2 in die stationäre Führung 3 eingeschoben, bis seine vordere Stirnfläche bündig mit der Stirnfläche 3a (Fig. 12) der Führung 3 ist. Dann wird die Einzuganordnung geschlossen (Fig. 1).

Bei geöffneter Klemmvorrichtung 2 wird nun mittels der Einzuganordnung 1 das Stangenmaterial R um einen vorbestimmten Hub vorgeschoben, so dass das vordere Ende R1 des Stangenmaterials R in die Umformmatrize 4 hineinragt (Fig. 2).

Daraufhin wird die Klemmanordnung 2 geschlossen und damit das Stangenmaterial R axial fixiert und auch gegen Verdrehung gesichert (Fig. 3).

Anschliessend wird das Stauchwerkzeug 5 axial gegen das Stangenmaterial R gepresst und dadurch das vordere Ende R1 des Stangenmaterials zu einer Scheibe S gestaucht (Fig. 4). Daraufhin wird das Stauchwerkzeug 5 wieder zurückgezogen (Fig. 5).

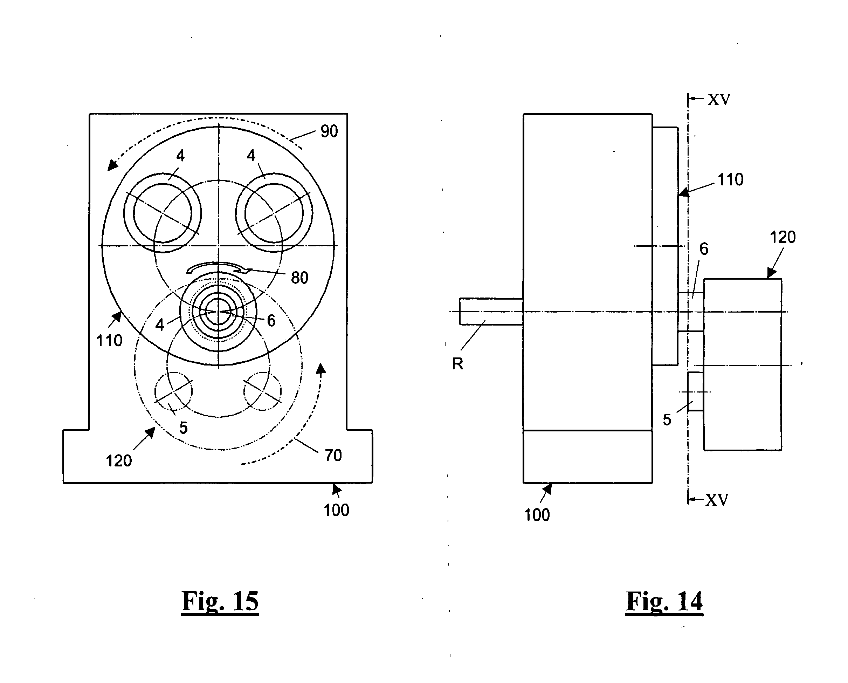

Als nächstes erfolgt ein Werkzeugwechsel, wobei das Stauchwerkzeug 5 durch das Napfwerkzeug 6 ersetzt wird (Fig. 6). Wie weiter unten im Zusammenhang mit den Figuren 14 und 15 noch näher erläutert wird, kann dazu ein Werkzeugkarussel vorgesehen sein, auf dem das Stauchwerkzeug 5 und das Napfwerkzeug 6 angeordnet sind. Die Austauschbewegung der beiden Werkzeuge 5 und 6 und die dafür erforderliche Antriebseinrichtung sind in den Figuren 6 und 12 durch einen Pfeil 70 symbolisiert.

Im nächsten Schritt wird das Napfwerkzeug 6 axial auf das Stangenmaterial R zu bewegt (Fig. 7). Im Zuge der Weiterbewegung dringt der Napfstempel 61 in die Scheibe S ein, wobei ein Fliesspressvorgang eingeleitet wird. Das Napfwerkzeug 6 bildet also Durchsetzungsmittel zum axialen Durchsetzen der Scheibe S. Das vom Napfstempel 61 verdrängte Material des Scheibenkerns Kₛ wird beim Durchsetzen in den Raum zwischen der inneren Umfangswand der Umformmatrize 4 und dem Napfstempel 61 gepresst. In der Endposition des Napfstempels 61 befindet sich seine Stirnfläche 61a axial knapp vor der Stirnfläche 3a der stationären Führung 3 (Fig. 8).

Das in der Umformmatrize 4 befindliche Material bildet das zu formende Formteil F, das in dieser Verfahrensphase allerdings noch über einen schmalen Umfangssteg mit dem Rest des Stangenmaterials R verbunden ist. Die Napfhülse 62 ist axial gegen das Stangenmaterial R hin kraftbeaufschlagt und erzeugt dadurch im Formteil F einen Druckspannungszustand. Die axiale Druckkraft wird so gross gewählt, dass eine ausreichende Formfüllung in den Randbereichen der Umformmatrize 4 sichergestellt und bei rotationssymmetrischen Formteilen F eine ausreichende Reibkraft an den anliegenden Wänden der Umformmatrize 4 und des Napfwerkzeugs 6 erzeugt wird, die das Abtrennen des Formteils durch Torsion ermöglicht.

Die Umformmatrize 4 ist gemäss einem wichtigen Erfindungsaspekt durch geeignete Materialwahl oder sonstige Vorkehrungen radial etwas elastisch ausgebildet. Dadurch entsteht eine starke reibschlüssige Verbindung zwischen der Umformmatrize 4 und dem unter Druck stehenden Formteil F einerseits und dem Formteil F und dem Napfstempel 61 anderseits. Dieser intensive Reibschluss ist für die nächsten Verfahrensschritte von besonderer Wichtigkeit.

Zunächst wird der Napfstempel 61 geringfügig zurückgezogen, wobei die Napfhülse 62 aber stehenbleibt und weiterhin kraftbeaufschlagt bleibt (Fig. 9). Die Kraftbeaufschlagung erfolgt durch den durch den Pfeil 63 (Fig. 7) symbolisierten Antrieb.

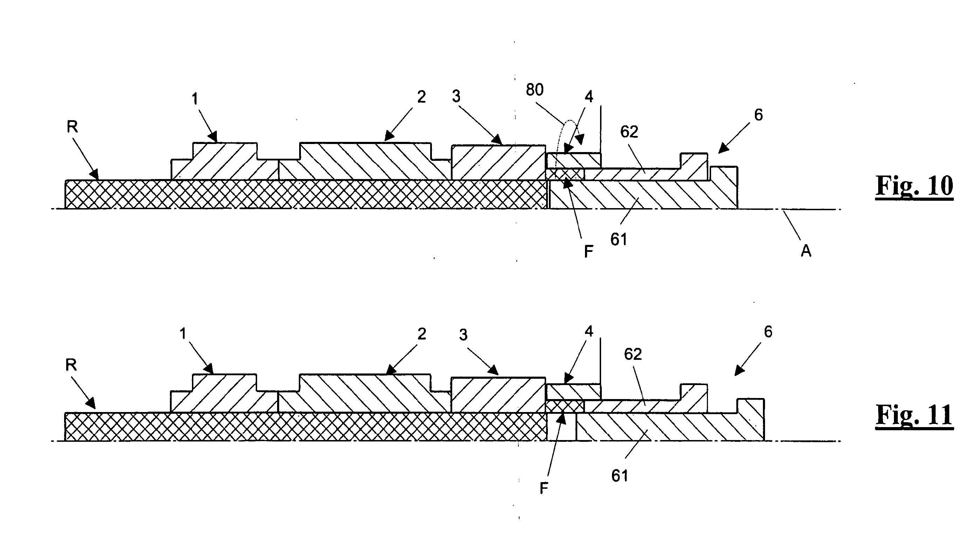

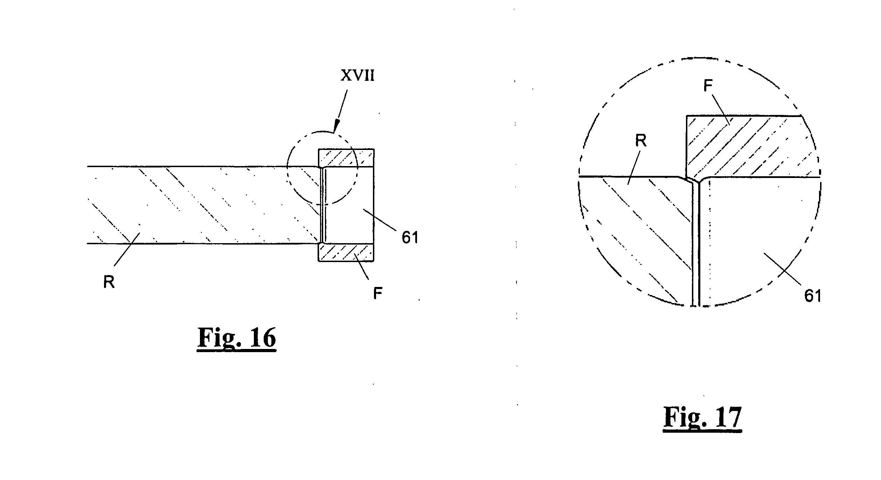

Dann wird das Formteil F vom Rest des Stangenmaterials R abgetrennt (Fig. 10). Gemäss einem der wesentlichsten Aspekte der Erfindung erfolgt diese Abtrennung durch Torsionsscherung. Dazu werden die Umformmatrize 4 und das Napfwerkzeug 6 zusammen mit dem zwischen ihnen im Reibschluss eingespannten Formteil F um die Achse A des (ortsfest festgeklemmten) Rest des Stangenmaterials R relativ zum letzteren verdreht. Die Verdrehung erfolgt über einen in der Zeichnung nur durch einen Pfeil 80 symbolisierten Antrieb. Bei dieser Verdrehung wird der das Formteil F mit dem Rest des Stangenmaterials R verbindende Umfangssteg geschert. Wie die vergrösserten Detaildarstellungen der Figuren 16 und 17 zeigen, entsteht durch die Torsionsabscherung am vorderen Ende des Rest des Stangenmaterials R eine leichte Fase, die sich bei späteren weiteren Umformprozessen jedoch weit weniger störend auswirkt als die Grate, die bei konventioneller Umformung und Abtrennung entstehen. Vor der Torsion kann die Umformmatrize 4 ähnlich wie der Napfstempel 61 auch geringfügig axial zurückgezogen werden, so dass sie von der Stirnfläche 3a der stationären Führung 3 etwas abhebt und dadurch der Verdrehung weniger Widerstand entgegensteht.

Im nächsten Schritt wird das Napfwerkzeug 6 wieder in seine Ausgangsposition zurückverfahren (Figuren 11 und 12). Dann wird das abgetrennte Formteil F quer zur Achsenrichtung aus der Umformposition abgeführt und z.B. an eine weitere Bearbeitungsstation weitertransportiert. Vorteilhafterweise verbleibt dabei das Formteil F in der Umformmatrize 4 und wird zusammen mit dieser aus der Umformposition bewegt. Dazu kann, wie weiter unten anhand der Figuren 14 und 15 näher erläutert ist, ein Matrizenkarussel vorgesehen sein, in welchem mehrere Umformmatrizen angeordnet sind. Die Entnahmebewegung des (in der Umformmatrize 4 befindlichen) Formteils F sowie der dafür erforderliche Antrieb sind in der Fig. 12 durch einen Pfeil 90 symbolisiert. Gleichzeitig mit der Entfernung der das Formteil F enthaltenden Umformmatrize 4 wird diese in der Umformposition durch eine neue, leere Umformmatrize 4 ersetzt (Figuren 12 und 13).

Schliesslich wird auch wieder ein Werkzeugwechsel vorgenommen, wobei das Napfwerkzeug 6 durch das Stauchwerkzeug 5 ersetzt wird (Figuren 12 und 13).

In einem finalen Verfahrensschritt wird die Einzuganordnung 1 geöffnet und um eine Hublänge axial zurückgefahren und dann wieder geschlossen (Figuren 12 und 13). Damit ist ein Verfahrenszyklus abgeschlossen und die Vorrichtung ist für den nächsten Verfahrenszyklus gemäss den vorstehenden Erläuterungen der Figuren 1-13 bereit. Die Verfahrenszyklen werden so lange wiederholt, bis die verbleibende Restlänge des Stangenmaterials R eine weitere Fortsetzung nicht mehr zulässt.

Wie schon erwähnt, sind das Stauchwerkzeug 5 und das Napfwerkzeug 6 einerseits und die Umformmatrizen 4 anderseits vorteilhafterweise in Karussels angeordnet. Die Figuren 14 und 15 illustrieren dies in schematisierter Darstellung. In einem Maschinenständer 100 ist ein Matrizenkarussel 110 drehbar gelagert und über nicht dargestellte Antriebsvorrichtungen drehbar angetrieben. Axial im Abstand vorgesetzt befindet sich ein drehbares Werkzeugkarussel 120, das ebenfalls über nicht dargestellte Antriebsvorrichtungen drehbar angetrieben ist. Die Bewegungsrichtungen der beiden Karussels 110 und 120 sowie die für die Rotationsbewegung erforderlichen Antriebe sind in Fig. 15 durch die schon in den Figuren 6 und 12 zu findenden Pfeile 70 und 90 angedeutet. Ferner ist in Fig. 15 durch den schon in Fig. 10 gezeigten Pfeil 80 angedeutet, wie die Umformmatrize 4 und das Napfwerkzeug 6 zusammen mit dem zwischen ihnen eingespannten Formteil F verdrehbar sind.

Die Klemmanordnung 2 kann, wie schon erwähnt, im Prinzip nach Art eines Spannfutters realisiert sein, wobei mehrere Klemmsegmente am Stangenmaterial längs dessen Umfangs angreifen. Solche Spannfutter sind jedoch problematisch. Um mit der vollen Kraft klemmen zu können, ist zwischen den Klemmsegmenten ein kleiner Spalt nötig, da andernfalls wegen nicht auszuschliessender schwankender Dicke des Stangenmaterials kein definierter Klemmdruck aufgebracht werden kann, falls die Backen aufeinander treffen. Beim vorstehend beschriebenen Stauchen und Napfen entsteht aber im Stangenmaterial bis relativ weit vor der Umformzone ein Spannungszustand im Material, der dieses dann in den verbleibenden Spalt zwischen den Klemmsegmenten treibt. Das zwischen den längsgeteilten Klemmsegmenten herausdringende Material kann den Weitertransport des Stangenmaterials behindern oder gar blockieren.

Dieser insbesondere bei Warmumformungsverfahren kritischen Problematik wird durch die nachstehend beschriebene bevorzugte Ausgestaltung der Klemmanordnung 2 begegnet.

Gemäss dieser bevorzugten Ausführungsform umfasst die Klemmanordnung 2 ein in seinen Innendimensionen der äusseren Querschnittsgestalt des Stangenmaterials R angepasstes Führungsrohr 22 und um dessen Umfang verteilt angeordnete, achsparallele Klemmbacken 23, die in achsparallelen Schlitzen 24 im Führungsrohr 22 praktisch spielfrei, aber radial ein- und auswärts beweglich angeordnet sind und durch äussere Krafteinwirkung radial auf das Stangenmaterial R gepresst werden können. An ihren dem Stangenmaterial R zugewandten Flächen sind die Klemmbacken 23 zur Verbesserung der Klemmwirkung mit reibungserhöhenden Strukturierungen, beispielsweise Rippen 25, versehen. Bei dieser bevorzugten Ausführungsform der Klemmanordnung ist der Klemmweg der Klemmbacken nicht begrenzt und kann aufgrund der praktisch spielfreien Einpassung der Klemmbacken in die Schlitze des Führungsrohrs kein Spalt entstehen, in den Material ausgetrieben werden könnte.

## Patentansprüche

1. Verfahren zur Herstellung eines mit einem durchgehenden Loch versehenen Formteils (F), bei dem ein Stangenmaterial (R) in seiner Längsrichtung um eine definierte Länge durch eine stationäre Führung (3) gleicher Querschnittsform wie das Stangenmaterial (R) in eine Umformmatrize (4), deren innere Umfangswand den äusseren Umfang des herzustellenden Formteils (F) festlegt, vorgeschoben wird, das Stangenmaterial (R) nach dem Vorschub in die Umformmatrize (4) axial festgehalten wird, der innerhalb der Umformmatrize (4) befindliche Teil des Stangenmaterials (R) mittels mindestens eines Napfwerkzeugs (6) axial durchsetzt und dabei fliessgepresst wird, wobei das verdrängte Material zwischen das mindestens eine Napfwerkzeug (6) und die innere Umfangswand der Umformmatrize (4) fliesst, der in der Umformmatrize (4) befindliche Teil des Stangenmaterials (R) anschliessend vom Rest des Stangenmaterials (R) abgetrennt wird und das so hergestellte Formteil (F) dann abgeführt wird, **dadurch gekennzeichnet, dass** das durch Fliesspressen gebildete, in der Umformmatrize (4) befindliche Formteil (F) dadurch vom Rest des Stangenmaterials abgetrennt wird, dass es zusammen mit der es umgebenden Umformmatrize (4) und dem mindestens einen Napfwerkzeug (6) koaxial relativ zum Rest des Stangenmaterials (R) verdreht wird.

2. Verfahren nach Anspruch 1, **dadurch gekennzeichnet, dass** der nach dem Vorschub des Stangenmaterials (R) in die Umformmatrize (4) innerhalb der Umformmatrize (4) befindliche Endbereich (R1) des Stangenmaterials (R) bei axial festgehaltenem Stangenmaterial (R) mittels mindestens eines Stauchwerkzeugs (5) axial gestaucht und dabei zu einer im Umfang durch die Umformmatrize (4) begrenzten Scheibe (S) umgeformt wird, die danach mittels des mindestens einen Napfwerkzeugs (6) axial durchsetzt wird.

3. Verfahren nach einem der vorangehenden Ansprüche, **dadurch gekennzeichnet, dass** der in der Umformmatrize (4) befindliche Teil des Stangenmaterials (R) mittels des mindestens einen Napfwerkzeugs (6) nicht vollständig, vorzugsweise nur zu 98-99% seiner axialen Dicke, durchsetzt wird, so dass das Formteil (F) vor seiner Abtrennung zunächst noch über einen dünnen Umfangssteg mit dem Rest des Stangenmaterials (R) verbunden bleibt.

4. Verfahren nach einem der vorangehenden Ansprüche, **dadurch gekennzeichnet, dass** die Umformmatrize (4) in radialer Richtung elastisch ausgebildet ist.

5. Verfahren nach einem der vorangehenden Ansprüche, **dadurch gekennzeichnet, dass** das Formteil (F) während seiner Abtrennung vom Rest des Stangenmaterials (R) mit einer axialen Druckkraft beaufschlagt wird.

6. Verfahren nach einem der vorangehenden Ansprüche, **dadurch gekennzeichnet, dass** das Stangenmaterial (R) mittels einer stationären, an seinem Umfang angreifenden, öffen- und schliessbaren Klemmanordnung (2) festgehalten wird.

7. Verfahren nach einem der vorangehenden Ansprüche, **dadurch gekennzeichnet, dass** das Stangenmaterial (R) mittels einer in Längsrichtung hin- und hergehend beweglich antreibbaren, am Umfang des Stangenmaterials angreifenden, öffen- und schliessbaren Einzuganordnung (1) in die Umformmatrize (4) vorgeschoben wird.

8. Verfahren nach einem der vorangehenden Ansprüche, **dadurch gekennzeichnet, dass** das Formteil (F) in der Umformmatrize (4) abgeführt wird, wobei hierzu vorzugsweise die Umformmatrize (4) mit dem Formteil (F) zunächst in Richtung der und dann quer zur Längserstreckung des Rests des Stangenmaterials von diesem wegbewegt wird.

9. Vorrichtung zur Durchführung des Verfahrens nach Anspruch 1 mit Vorschubmitteln (1) und Festhaltemitteln (2) für ein Stangenmaterial (R), einer Führung (3) für das Stangenmaterial, einer Umformmatrize (4) und Durchsetzungsmitteln (6) zum axialen Durchsetzen des in der Umformmatrize (4) befindlichen Teils des Stangenmaterials (R), **dadurch gekennzeichnet, dass** sie einen Antrieb (80) aufweist, mit welchem die Umformmatrize (4) mit dem in ihr befindlichen Teil des Stangenmaterials (R), der nach dem axialen Durchsetzen ein Formteil (F) bildet, und der Rest des Stangenmaterials (R) relativ zueinander verdrehbar sind, wobei das Formteil (F) durch Torsionsscherung vom Rest des Stangenmaterials (R) abtrennbar ist.

10. Vorrichtung nach Anspruch 9, **dadurch gekennzeichnet, dass** sie mindestens ein Stauchwerkzeug (5) zur axialen Stauchung und Umformung eines in der Umformmatrize (4) befindlichen Endbereichs (R1) des Stangenmaterials (R) aufweist.

11. Vorrichtung nach Anspruch 9 oder 10, **dadurch gekennzeichnet, dass** die Durchsetzungsmittel ein Napfwerkzeug (6) umfassen, welches einen Napfstempel (61) und eine diesen umschliessende Napfhülse (62) aufweist, und dass das in der Umformmatrize (4) befindliche Formteil (F) über die Napfhülse (62) mit einer axialen Druckkraft beaufschlagbar ist.

12. Vorrichtung nach einem der Ansprüche 9-11, **dadurch gekennzeichnet, dass** die Umformmatrize (4) radial elastisch ausgebildet ist.

13. Vorrichtung nach einem der Ansprüche 9-12, **dadurch gekennzeichnet, dass** die Festhaltemittel für das Stangenmaterial (R) eine stationäre, am Umfang des Stangenmaterials angreifende, öffen- und schliessbare Klemmanordnung (2) umfassen.

14. Vorrichtung nach Anspruch 13, **dadurch gekennzeichnet, dass** die Klemmanordnung (2) ein in seinen Innendimensionen der äusseren Querschnittsgestalt des Stangenmaterials (R) angepasstes Führungsrohr (22) und um dessen Umfang verteilt angeordnete, achsparallele Klemmbacken (23) aufweist, die in achsparallelen Schlitzen (24) im Führungsrohr (22) im Wesentlichen spielfrei, aber radial ein- und auswärts beweglich angeordnet sind und durch äussere Krafteinwirkung radial auf das Stangenmaterial (R) pressbar sind, wobei vorzugsweise die Klemmbacken (23) an ihren dem Stangenmaterial (R) zugewandten Flächen mit reibungserhöhenden Strukturierungen, insbesondere Rippen (25), versehen sind.

15. Vorrichtung nach einem der Ansprüche 9-14, **dadurch gekennzeichnet, dass** die Umformmatrize (4) quer zur Längserstreckung des Stangenmaterials (R) von der Führung (3) wegbewegbar ist.

16. Vorrichtung nach einem der Ansprüche 9-15, **dadurch gekennzeichnet, dass** sie ein Matrizenkarussel (110) aufweist, in welchem zwei oder mehrere Umformmatrizen (4) angeordnet sind, die mittels des Matrizenkarussels selektiv koaxial vor der Führung (3) positionierbar sind.

## Claims

1. Method for producing a formed part (F) furnished with a through hole, in which a rod material (R) is advanced by a defined length in the direction of its lengthwise extension into a forming die (4), the inner circumferential wall of which defines the outer circumference of the formed part (F) to be produced, through a stationary guide (3) having the same cross sectional shape as the rod material (R), the rod material (R) is immobilised axially after being advanced into the forming die (4), the portion of the rod material (R) located inside the forming die (4) is penetrated axially and at the same time impact extruded by at least one dishing tool (6), wherein the displaced material flows between the at least one dishing tool (6) and the inner circumferential wall of the forming die (4), the part of the rod material (R) that is inside the forming die (4) is then separated from the rest of the rod material (R), and the formed part (F) produced thereby is then transported away, **characterized in that** the impact-extruded formed part (F) located inside the forming die (4) is separated from the rest of the rod material by rotating it together with the forming die (4) surrounding it and the at least one dishing tool (6) coaxially relative to the rest of the rod material (R).

2. Method according to claim 1, **characterized in that** the end portion (R1) of the rod material (R) that is located inside the forming die (4) after the rod material (R) has been advanced into the forming die (4) is axially swaged by at least one swaging tool (5) while the rod material (R) is axially immobilised, and is thus shaped into a disc (S) whose circumference is defined by the forming die (4) and which is subsequently penetrated axially by the at least one dishing tool (6).

3. Method according to any one of the preceding claims, **characterized in that** the portion of the rod material (R) located in the forming die (4) is not fully penetrated, but preferably only as far as 98-99% of its axial thickness, by the at least one dishing tool (6), so that the formed part (F) before its separation initially remains attached to the rest of the rod material (R) via a thin circumferential fin.

4. Method according to any one of the preceding claims, **characterized in that** the forming die (4) is constructed so as to be radially elastic.

5. Method according to any one of the preceding claims, **characterized in that** the formed part (F) is subjected to an axial compression force while it is being separated from the rest of the rod material (R).

6. Method according to any one of the preceding claims, **characterized in that** the rod material (R) is immobilised by a stationary clamping arrangement (2) that can be opened and closed and engages circumferentially with the rod material.

7. Method according to any one of the preceding claims, **characterized in that** the rod material (R) is advanced into the forming die (4) by an advancing mechanism (1) that is movable by driving means backwards and forwards in the longitudinal direction, can be opened and closed, and engages circumferentially with the rod material.

8. Method according to any one of the preceding claims, **characterized in that** the formed part (F) is transported away in the forming die (4), wherein to this end the forming die (4) is preferably moved away from the rod material together with the formed part (F), first in the direction of and then perpendicularly to the longitudinal extension of the rest of the rod material.

9. Device for carrying out the method according to claim 1, including advancing means (1) and immobilising means (2) for a rod material (R), a guide (3) for the rod material, a forming die (4) and penetration means (6) for axially penetrating the part of the rod material (R) that is located in the forming die (4), **characterized in that** it has a driving means (80) with which the forming die (4) including the portion of the rod material (R) contained therein, which after axial penetration becomes a formed part (F), and the rest of the rod material (R) are rotatable relative to each other, wherein the formed part (F) can be separated from the rest of the rod material (R) by torsion shearing.

10. Device according to claim 9, **characterized in that** it has at least one swaging tool (5) for axial swaging and forming an end portion (R1) of the rod material (R) located in the forming die (4).

11. Device according to claim 9 or 10, **characterized in that** the penetration means include a dishing tool (6) equipped with a dishing punch (61) and a dishing sleeve (62) surrounding the punch, and that the formed part (F) located inside the forming die (4) may be subjected to axial compression force via the dishing sleeve (62).

12. Device according to any one of claims 9 to 11, **characterized in that** the forming die (4) is constructed so as to be radially elastic.

13. Device according to any one of claims 9 to 12, **characterized in that** the immobilising means for the rod material (R) include a stationary clamping arrangement (2) that can be opened and closed and engages with the rod material (R) circumferentially.

14. Device according to claim 13, **characterized in that** the clamping arrangement (2) has a guide tube (22) whose interior dimensions are adapted to the exterior cross-sectional shape of the rod material (R) and clamping jaws (23) arranged parallel to the axis and disposed about the circumference thereof, which clamping jaws are movable essentially without freeplay but radially inwards and outwards in axis-parallel slots (24) in the guide tube (22) such that they may be brought to radially bear on the rod material (R) by the application of external force, and wherein the clamping jaws (23) are preferably furnished with friction enhancing structures, particularly ribs (25), on the sides of the jaws facing the rod material (R).

15. Device according to any one of claims 9 to 14, **characterized in that** the forming die (4) is movable away from the guide perpendicularly to the longitudinal extension of the rod material (R).

16. Device according to any one of claims 9 to 15, **characterized in that** it is equipped with a die carousel (110) in which two or more forming dies (4) are accommodated which may be positioned coaxially in front of the guide (3) by the die carousel as desired.

## Revendications

1. Procédé pour la production d'une pièce façonnée (F) pourvue d'un trou traversant, dans lequel un matériau en forme de barre (R) est avancé dans sa direction longitudinale d'une longueur définie à travers un guidage stationnaire (3) présentant la même forme de section transversale que le matériau en forme de barre (R) jusque dans une matrice de mise en forme (4) dont la paroi périphérique intérieure détermine la périphérie extérieure de la pièce façonnée (F) à produire, après avoir été avancé jusque dans la matrice de mise en forme (4) le matériau en forme de barre (R) est fermement maintenu axialement, la partie du matériau en forme de barre (R) qui se trouve dans la matrice de mise en forme (4) est traversée axialement au moyen d'au moins un outil en forme de godet (6) et est ainsi soumise à un pressage-fluage, de sorte que le matériau refoulé flue entre ledit au moins un outil en forme de godet (6) et la paroi périphérique intérieure de la matrice de mise en forme (4), la partie du matériau en forme de barre (R) qui se trouve dans la matrice de mise en forme (4) est ensuite séparée du reste du matériau en forme de barre (R), et la pièce façonnée (F) ainsi produite est alors évacuée,
**caractérisé en ce que** la pièce façonnée (R) formée par le pressage-fluage qui se trouve dans la matrice de mise en forme (4) est séparée du reste du matériau en forme de barre du fait qu'elle est amenée à tourner, conjointement avec la matrice de mise en forme (4) qui l'entoure et avec ledit au moins un matériau en forme de godet (6), coaxialement par rapport au reste du matériau en forme de barre (R).

2. Procédé selon la revendication 1, **caractérisé en ce que** la zone terminale (R1) du matériau en forme de barre (R), qui se trouve, après l'avance du matériau en forme de barre (R) jusque dans la matrice de mise en forme (4), à l'intérieur de la matrice de mise en forme (4), est refoulée axialement au moyen d'au moins un outil de refoulement (5), alors que le matériau en forme de barre (R) est fermement retenu axialement, et est ainsi déformée pour donner un disque (S) délimitée dans sa périphérie par la matrice de mise en forme (4), qui et ensuite traversé axialement au moyen dudit au moins un outil en forme de godet (6).

3. Procédé selon l'une des revendications précédentes, **caractérisé en ce que** la partie du matériau en forme de barre (R) qui se trouve dans la matrice de mise en forme (4) est traversée, au moyen dudit au moins un outil en forme de godet (6), de manière non pas complète, et de préférence seulement sur 98 à 99 % de son épaisseur axiale, de sorte que, avant sa séparation, la pièce façonnée (R) reste tout d'abord encore reliée avec le reste du matériau en forme de barre (R) via une barrette périphérique mince.

4. Procédé selon l'une des revendications précédentes, **caractérisé en ce que** la matrice de mise en forme (4) est réalisée élastique en direction radiale.

5. Procédé selon l'une des revendications précédentes, **caractérisé en ce que** la pièce façonnée (R) est sollicitée avec une force de compression axiale pendant sa séparation du reste du matériau en forme de barre (R).

6. Procédé selon l'une des revendications précédentes, **caractérisé en ce que** le matériau en forme de barre (R) est fermement retenu au moyen d'un agencement de serrage stationnaire (2) capable d'être ouvert et fermé, qui attaque sa périphérie.

7. Procédé selon l'une des revendications précédentes, **caractérisé en ce que** le matériau en forme de barre (R) est avancé jusque dans la matrice de mise en forme (4) au moyen d'un agencement de tirage (1) susceptible d'être entraîné en déplacement en va-et-vient en direction longitudinale, qui attaque la périphérie du matériau en forme de barre, capable d'être ouvert et fermé.

8. Procédé selon l'une des revendications précédentes, **caractérisé en ce que** la pièce façonnée (R) est évacuée dans la matrice de mise en forme (4), la matrice de mise en forme (4) avec la pièce façonnée (R) étant de préférence tout d'abord déplacée en direction de l'extension longitudinale et ensuite transversalement à l'extension longitudinale du reste du matériau en forme de barre en éloignement de celui-ci.

9. Appareil pour la mise en oeuvre du procédé selon la revendication 1, comprenant des moyens d'avance (1) et des moyens de retenue (2) pour un matériau en forme de barre (R), un guidage (3) pour le matériau en forme de barre, une matrice de mise en forme (4), et des moyens de traversée (6) pour traverser axialement la partie du matériau en forme de barre (R) qui se trouve dans la matrice de mise en forme, **caractérisé en ce qu'**il comprend un entraînement (80) au moyen duquel la matrice de mise en forme (4) avec la partie du matériau en forme de barre (R) qui se trouve en elle-même et qui forme après la traversée axiale une pièce façonnée (R), et le reste du matériau en forme de barre (R) sont susceptibles d'être tournés l'un par rapport à l'autre, de sorte que la pièce façonnée (R) est séparable du reste du matériau en forme de barre (R) par cisaillement-torsion.

10. Appareil selon la revendication 9, **caractérisé en ce qu'**il comprend au moins un outil de refoulement (5) pour le refoulement axial et pour la déformation d'une zone terminale (R1) du matériau en forme de barre (R) qui se trouve dans la matrice de mise en forme (4).

11. Appareil selon la revendication 9 ou 10, **caractérisé en ce que** les moyens de traversée comprennent un outil en forme de godet (6), qui comprend un poinçon de godet (61) et un manchon de godet (62) entourant celui-ci, et **en ce que** la pièce façonnée (F) qui se trouve dans la matrice de mise en forme (4) est susceptible d'être sollicitée avec une force de compression axiale via le manchon de godet (62).

12. Appareil selon l'une des revendications 9 à 11, **caractérisé en ce que** la matrice de mise en forme (4) est réalisée élastique en direction radiale.

13. Appareil selon l'une des revendications 9 à 12, **caractérisé en ce que** les moyens de retenue pour le matériau en forme de barre (R) comprennent un agencement de serrage stationnaire (2), susceptible d'être ouvert et fermé, qui attaque la périphérie du matériau en forme de barre.

14. Appareil selon la revendication 13, **caractérisé en ce que** l'agencement de serrage (2) comprend un tube de guidage (22) dont les dimensions intérieures sont adaptées à la configuration de section transversale extérieure du matériau en forme de barre (R), et des mâchoires de serrage (23) parallèles à l'axe, agencées de manière répartie autour de la périphérie du tube, les mâchoires étant agencées sensiblement sans jeu dans des fentes parallèles à l'axe (24) dans le tube de guidage (22), mais déplaçables radialement vers l'intérieur et vers l'extérieur, et pouvant être pressées sous l'action d'une force extérieure radialement contre le matériau en forme de barre (R), et les mâchoires de serrage (23) étant de préférence pourvues, au niveau de leurs surfaces tournées vers le matériau en forme de barre (R), de structures augmentant la friction, en particulier de nervures (25).

15. Appareil selon l'une des revendications 9 à 14, **caractérisé en ce que** la matrice de mise en forme (4) est déplaçable en éloignement du guidage (3) transversalement à l'extension longitudinale du matériau en forme de barre (R).

16. Appareil selon l'une des revendications 9 à 15, **caractérisé en ce qu'**il comprend un tourniquet de matrices (110), dans lequel sont agencées deux ou plusieurs matrices de mise en forme (4), lesquelles peuvent être positionnées sélectivement au moyen du tourniquet de matrice coaxialement devant le guidage (3).
